# EUROPÄISCHE PATENTSCHRIFT

(11) **EP 0 561 484 B1**
(45) Veröffentlichungstag und Bekanntmachung des Hinweises auf die Patenterteilung: **13.03.1996**
(21) Anmeldenummer: 93250075.4
(22) Anmeldetag: 05.03.1993
(51) Int. Cl.: B01D 53/86, B01D 53/94, B01J 35/00, B01J 35/04, B01J 37/02

(54) **Verfahren und Vorrichtung zur Reinigung schadstoffbeladener Abluft durch heterogene Katalyse**
Process and apparatus for the cleaning of exhaust air cointaining noxious substances by heterogeneous catalysis
Procédé et dispositif de purification d'air d'échappement contenant des substances nocives par catalyse hétérogène

(30) Priorität: 18.03.1992 DE 4209198
(43) Veröffentlichungstag der Anmeldung: 22.09.1993
(73) Patentinhaber: MANNESMANN Aktiengesellschaft, D-40027 Düsseldorf (DE)
(72) Erfinder: Becker, Oliver, W-6646 Losheim (DE); Kolz, Sabine, W-6624 Grossrosseln 5 (DE); Hager, Herbert, W-6637 Nalbach 3 (DE)
(74) Vertreter: Meissner, Peter E., Dipl.-Ing.

(56) Entgegenhaltungen:
- EP-A- 0 333 559
- EP-A- 0 485 179
- EP-A- 0 492 169
- FR-A- 2 329 346
- GB-A- 2 252 968
- US-A- 4 234 549
- DATABASE WPIL Section Ch, Week 9001, Derwent Publications Ltd., London, GB; Class E31, AN 90-006503

## Beschreibung

Die Erfindung betrifft ein Verfahren zur Reinigung schadstoffbeladener Abluft durch heterogene Katalyse gemäß dem Gattungsbegriff des Hauptanspruches.

Die katalytische Verbrennung von trägerfixierten Schadstoffen ist prinzipiell bekannt und läßt sich mit einer großen Vielfalt von Katalysatoren durchführen (DE 38 04 722). Bei den bisherigen Ausführungen wird das Katalysatormaterial auf keramische und metallische Wabenkörper oder sonstige keramische Träger, z. B. Schüttung mit großer Oberfläche aufgebracht. Der Nachteil der bisher bekannten Katalyseverfahren besteht darin, daß die gesamte Trägerluft auf die Arbeitstemperatur des Katalysatormaterials (200 bis 600 Grad Celsius) erwärmt werden muß. Im Falle von Verbrennungsprozessen wie z. B. Kraftfahrzeugmotoren, hat das zu reinigende Abgas bereits selbst die erforderliche Prozeßtemperatur. Im ersteren Fall, bei dem die erforderliche Energie von außen zugeführt werden muß, bedeutet dies einen hohen Energieaufwand und schränkt den Anwendungsbereich der katalytischen Nachverbrennung ein. Zur Überwindung dieses Problems ist bereits vorgeschlagen worden (DE 39 29 521), nur die Katoberfläche auf die erforderliche Arbeitstemperatur zu bringen, um mit einer Trägerluft von etwa Raumtemperatur arbeiten zu können. Dazu wird ein mit Katalysatormaterial beschichteter Heizdraht eingesetzt, der durch Anlegen einer elektrischen Spannung direkt beheizt wird. Die trägerfixierte Schadluft wird nun so schnell, beispielsweise durch ein enges Gitter aus Katalysatordrähten, die auf einem aus elektrisch isolierendem Werkstoff hergestellten Rahmen aufgespannt sind, geleitet, daß sich die Luft nur geringfügig erwärmt und die Schadstoffe weitgehend durch die katalytische Oxidation abgebaut werden. Nachteilig bei diesem Verfahren ist der schlechte Wirkungsgrad der Anlage, da jedes Luftmolekül mit den katalytisch beschichteten Heizdrähten in Kontakt gebracht werden muß. Dies ist aber bei einem für die Leistung der Anlage erforderlichen Durchsatz der schadstoffbeladenen Abluft praktisch nicht möglich. Das geschilderte Verfahren versagt bei Abluft mit geringer Schadstoffkonzentration insbesondere dann, wenn sie unter einen Wert von 100 mg/m³ Abluft absinkt.

Neben der unmittelbaren katalytischen Verbrennung ist auch das Verfahren der vorherigen Adsorption von Schadstoffen aus trägerfixierter Abluft mittels eines Adsorptivs, üblicherweise Aktivkohle, mit anschließender Desorption dieser Stoffe aus der Aktivkohle und der abschließenden katalytischen Oxidation bekannt (DE 40 03 668). Dadurch, daß die in der Aktivkohle adsorbierten Schadstoffe anschließend desorbiert und in einem Oxidationskatalysator überführt werden, wird die Aktivkohle immer wieder regeneriert und kann im Verfahren bleiben. Nachteilig bei diesem Verfahren ist, daß zur Regenerierung der Aktivkohle beispielsweise aufgeheiztes Inertgas durch die Aktivkohle geleitet werden muß. Anschließend muß die aufgeheizte Aktivkohle gekühlt werden, damit beim nachfolgenden Durchströmen der Abluft die Schadstoffe adsorptiv wieder an der Aktivkohle angelagert werden können.

Aus der JP-A-63240923 A. Derwent-Abstract WPIL 88-326806 ist ein Luftreinigungsfilter bekannt, der aus einem hitzebeständigen Netz besteht, auf dem als Adsorbens Aktivkohle und darauf eine katalytische Beschichtung aufgebracht ist. Die Regeneration erfolgt durch Erhitzen in einem Ofen. Hierbei verbrennen die adsorbierten Schadstoffe katalytisch.

Ferner ist aus der US-PS 38 83 328 ein Kohlefaserfilter bekannt, der durch Anlegen einer elektrischen Spannung erwärmt werden kann. Dabei werden die adsorbierten Schadstoffe durch thermische Nachverbrennung zerstört.

Schließlich sei noch auf die US-A-42 34 549 verwiesen, aus der ein Kombiniertes Adsorptions-Katalyse-Element bekannt ist.

Hierbei erfolgt die Regeneration des Elementes durch adiabate Temperatur erhöhung, die durch die Verbrennungswärme der zu Verbrennenden Schadstoffe gespeist wird.

Aufgabe der Erfindung ist es, ein verbessertes Verfahren anzugeben, mit dem schadstoffbeladene Abluft mit einer Schadstoffkonzentration von Weniger als 100 mg/m³ Abluft, insbesondere für eine Konzentration von weniger als 10 mg/m³ mit gutem Wirkungsgrad und geringem Energiebedarf gereinigt werden kann.

Diese Aufgabe wird mit den im kennzeichnenden Teil des Anspruches 1 angegebenen Merkmalen gelöst. Vorteilhafte Weiterbildungen sowie eine Vorrichtung zur Durchführung des Verfahrens sind Bestandteile von weiteren Ansprüchen.

Kern der Erfindung ist die Überlegung, daß bei Abluft mit einer geringen Schadstoffkonzentration in der Größenordnung von weniger als 100 mg/m³ Abluft, insbesondere bei einer Konzentration von weniger als 10 mg/m³ die Schadstoffe zuerst aufkonzentriert werden müssen, um sie dann wirkungsvoll mit geringe Energieaufwand katalytisch verbrennen zu können. Die gewünschte Aufkonzentration wird dadurch erreicht, daß statt der bisher üblichen Aktivkohle oder Zeolithe ein beheizbares Gewebeband mit einer Maschenweite kleiner 1 mm und einer Drahtdicke kleiner 0,1 mm verwendet wird. Damit dieses Gewebeband ähnlich wie Aktivkohle als Adsorptiv wirken kann, weist das Gewebeband an der Oberfläche eine dünne Schicht von gewachsenen Kristallen auf, die mit Katalysatormaterial überzogen sind. Die winzigen Zwischenräume, die durch die gewachsenen Kristalle entstehen, sind ausschlaggebend für die adsorptive Wirkung des Gewebebandes. Neu an dem vorgeschlagenen Verfahren ist die direkte katalytische Verbrennung der adsorptiv angelagerten Schadstoffe unmittelbar an der Anlagerungsstelle. Dadurch, daß die aufgewachsene Kristallschicht erfindungsgemäß mit Katalysatormaterial überzogen ist, erhält das Gewebeband eine Doppelfunktion einmal Adsorptiv und gleichzeitig Katalysator zu sein. Die Regenerierung des Adsorptivs erfolgt in einfacher Weise durch eine direkte elektrische Beheizung des Gewebebandes. Ein energetisch aufwendiges Austreiben der angelagerten Schadstoffe ist bei diesem Verfahren nicht erforderlich. Da das Gewebeband im Unterschied zur Aktivkohle nur eine geringe Wärmespeicherkapazität aufweist, ist auch eine nachträgliche zwangskühlung des Adsorptivs nach dem Abbrennen nicht erforderlich. Schon nach kurzer Zeit nach Abschalten der Beheizung des Gewebebandes kühlt das Adsorptiv auf eine Temperatur beispielsweise etwa 40 Grad Celsius ab, die für eine erneute adsorptive Beladung geeignet ist.

Um eine möglichst große Oberfläche bei kleinen Außenmaßen des Katalysators zu realisieren, wird das Gewebeband entweder spiralförmig gewickelt oder gefaltet. Damit keine zu Kurzschluß führenden Kontakte zwischen den einzelnen Windungen entstehen, wird ein elektrisch isoliertes Abstandsmittel zwischen die einzelnen Windungen gelegt. Vorzugsweise ist dieses Abstandsmittel ein Band oder Gestrick bestehend aus hauchdünnen Keramikfasern. Geeignet für solche Zwecke ist auch eine Matte aus Glasfasern. Eine solche Distanzmatte hat zwar den Nachteil, daß der Strömungswiderstand für den Durchsatz der zu reinigenden Abluft etwas erhöht wird, hat aber auf der anderen Seite den Vorteil, daß durch die vielen engen Kanäle des Bandes die Abluft so turbulent verwirbelt wird, daß jedes Abluftmolekül mit der Adsorptivoberfläche in Berührung kommt. Zur Erhöhung der Adsorptivwirkung wird weiterbildend vorgeschlagen, das Band oder Gestrick ebenfalls mit einer Kristallschicht, die mit Katalysatormaterial überzogen ist, zu versehen. Vorzugsweise ist das für das Gewebeband als auch für die Distanzmatte verwendete Mineralkristall ein Nickelspinell. Andere Kristallarten sind aber ebenso dafür geeignet.

Je nach Schadstoffkonzentration und Menge der anfallenden Abluft ist zu irgendeinem Zeitpunkt die adsorptive Beladungskapazität des Gewebebandes bzw. des Sandwich-Elementes, d. h. Gewebeband plus Distanzmatte erschöpft. Sobald dieser Zustand erreicht ist, wird die Beheizung für das Gewebeband eingeschaltet und die durch Adsorption aufkonzentrierten Schadstoffe werden in bekannter Weise katalytisch zu umweltverträglichen Reaktionsprodukten wie CO₂ und Wasserdampf verbrannt. Der Vorteil dieser Verfahrensweise ist darin zu sehen, daß die Beheizung nur für die Regenerierung des Katalysators erforderlich ist und die schadstoffbeladene Trägerluft nicht zuvor mittels Gasbrenner oder Heizlüfter separat aufgeheizt werden muß. Auf diese Weise wird eine große Menge an Energie eingespart. Von Vorteil ist auch die geringe Wärmespeicherkapazität des gewickelten Sandwich-Elementes, so daß schon nach kurzer Zeit nach Einschalten der Beheizung die erforderliche Prozeßtemperatur erreicht wird. Den Zeitpunkt des Erreichens der Beladungskapazität des Adsorptivs kann man auf verschiedene Weise ermitteln. Eine Möglichkeit besteht darin, die Schadstoffkonzentration und die Menge der anfallenden zu reinigenden Abluft laufend zu messen und mit der zuvor rechnerisch oder durch Versuch ermittelten Beladungskapazität in Beziehung zu setzen. Unter Berücksichtigung eines festgelegten Sicherheitsabstandes wird aus diesem Verhältnis ein Steuersignal für das Einschalten der Beheizung des Adsorptivs gebildet. Nach Ablauf einer festgelegten Abbrennzeit wird die Beheizung wieder abgeschaltet. Bei Abluftanfall mit relativ konstanten Werten hinsichtlich Menge und Konzentration kann der Beladungszeitraum auch rechnerisch ermittelt und die Beheizung zeitgetaktet eingestellt werden.

Für eine wirkungsvolle katalytische Oxidation ist es erforderlich, daß das katalytisch beschichtete Gewebeband durch die Beheizung auf die auf den Schadstofftyp abgestimmte prozeßtemperatur erwärmt wird. Um diese genau zu erfassen, wird außerdem vorgeschlagen, einen Temperaturfühler, z.B. ein Thermoelement am Gewebeband zu befestigen und die Meßsignale einem Regelkreis für die Beheizung des Gewebebandes zuzuführen. Die Befestigung des Thermoelementes erfolgt vorzugsweise mittels Laserschweißen, da bei vielen anderen Techniken die dünnen Drähte des Gewebebandes zerstört werden.

Zu Beginn der Beschreibung wurde schon darauf hingewiesen, daß die geringe Wärmespeicherkapazität des Gewebebandes bzw. des Sandwich-Elementes, d. h. Gewebeband plus Distanzmatte ein wesentlicher Aspekt für das vorgeschlagene Verfahren ist. Aber auch bei einer geringen Wärmespeicherkapazität benötigt das Gewebeband eine endliche Zeit, um die erforderliche Prozeßtemperatur nach Einschalten der Beheizung zu erreichen. In dieser Phase des Erwärmens läuft der katalytische Prozeß nur unvollkommen ab, d. h. es können Zwischenprodukte entstehen, die weiterhin beispielsweise geruchsbelästigend sind. Bei geringen Anforderungen an eine solche Reinigungsanlage wird man diesen zeitlich begrenzten Ausstoß von Zwischenprodukten, die unvollkommen katalytisch verbrannt sind, in Kauf nehmen. Dies gilt auch für die Phase des Abkühlens des Adsorptivs nach Abschalten der Beheizung, bevor die adsorptive Wirkung des Elementes wieder voll einsetzt. Für Anlagen mit sehr strengen Auflagen wird vorgeschlagen, den Abgasstrom mit den Zwischenprodukten auf die Eingangsseite des Adsorptivs rückzuführen. Dieses Kurzschlußverfahren für die Zeit des Erwärmens hat außerdem den Vorteil, daß durch die Rückführung des bereits teilerwärmten Abgasstromes die Erwärmung des Adsorptivs auf Prozeßtemperatur in kürzerer Zeit erfolgt. Um die katalytische Oxidation in dieser Phase zu unterstützen, kann gegebenenfalls eine geringe Menge an Frischluft hinzugemischt werden, um genügend Sauerstoff für die Oxidation zur Verfügung zu haben. Alternativ ist es auch möglich, dem Adsorptiv einen beheizbaren Katalysator nachzuschalten, der bei Einschalten der Beheizung für das Adsorptiv bereits auf Prozeßtemperatur erwärmt ist. Steuerungsmäßig wird das in der Weise gelöst, daß man vor Erreichen der maximal möglichen Beladungskapazität einen prozentualen niedrigeren Wert festlegt, z. B. 80 % und bei Erreichen dieses Wertes die Beheizung für den nachgeschalteten Katalysator einschaltet. Die Anlagerung im Adsorptiv wird währenddessen fortgesetzt, bis der festgelegte Endwert der Beladungskapazität erreicht ist. Danach wird die Beheizung des Adsorptivs eingeschaltet. Während der Erwärmung bis zum Erreichen der erforderlichen Prozeßtemperatur übernimmt der nachgeschaltete Katalysator die vollständige Nachverbrennung der unverbrannten oder nur teilweise verbrannten Zwischenprodukte. In dem Maße, wie das Adsorptiv auf Prozeßtemperatur erwärmt wird, kann die Beheizung für den nachgeschalteten Katalysator heruntergeregelt werden, da der nachgeschaltete Katalysator durch den sich erwärmenden Abgasstrom zunehmend fremdbeheizt wird. Sobald das Adsorptiv die prozeßtemperatur erreicht hat, ist während der Abbrennphase nur eine taktweise Beheizung des nachgeschalteten Katalysators erforderlich, und zwar in dem Umfang, die zur Aufrechterhaltung der Prozeßtemperatur erforderlich ist. Nach Ablauf des Abbrennens wird die Beheizung für das Adsorptiv abgeschaltet, und es beginnt die Abkühlphase. In dem Maße muß die Beheizung des nachgeschalteten Katalysators wieder hochgefahren werden, da der Anteil der Fremdheizung ständig abnimmt. Sobald das Adsorptiv die für eine erneute adsorptive Anlagerung erforderliche Temperatur, beispielsweise etwa 40 Grad Celsius, wieder erreicht hat, wird die Beheizung für den nachgeschalteten Katalysator abgeschaltet. Der nachgeschaltete Katalysator kann baulich klein gewählt werden, da er nur für eine kurze Zeit und für eine geringe Schadstoffkonzentration die katalytische Verbrennung übernehmen soll. Damit der Zeitpunkt des Einschaltens der Beheizung für den nachgeschalteten Katalysator und der des Adsorptivs möglichst eng beieinander liegt, wird man bestrebt sein, die Erwärmungszeit für den nachgeschalteten Katalysator gering zu halten.Dies kann man dadurch erreichen, daß man das Verhältnis von wirksamer Katoberfläche zur Masse des Katalysators möglichst groß wählt.

Für eine weitere Steigerung der Adsorptivwirkung des vorgeschlagenen Elementes weist das Gewebeband an der Oberfläche zwei unterschiedliche Kristallstrukturen auf. Die zuerst gewachsene Kristallschicht ist recht grob und die entstehenden Zwischenräume sind relativ groß. Die zweite Kristallschicht wird an die erste angelagert und weist eine entsprechende feinere Struktur auf, so daß überall winzig kleine Zwischenräume entstehen. Auf diese Weise kann man erreichen, daß die Adsorptivwirkung eines solchen beschichteten Gewebebandes in die Nähe der Aktivkohle kommt. Dabei bleibt die erfindungsgemäße Doppelfunktion eines solchen Elementes d. h. Adsorptiv und Katalysator in einem Element erhalten.
Das Adsorptivelement kann als Rohr- oder als Kanalmodul ausgebildet und durch Reihen- oder Parallelschaltung zu größeren Einheiten zusammengefaßt werden. Im ersteren Fall des Rohrmoduls wird das Sandwich-Element aus metallischem Gewebeband und keramischer Distanzmatte spiralförmig gewickelt und abgedichtet in einem Rohrabschnitt angeordnet. Beim Kanalmodul wird das Sandwich-Element gefaltet und die Abluft wahlweise von der Seite in Richtung der Falten oder quer dazu dem Element zugeführt.

Bei dem breiten möglichen Anwendungsspektrum dieses Verfahrens bei der Lebens- und Genußmittelherstellung, Intensivtierhaltung, Großküchen sowie der chemischen und pharmazeutischen Industrie muß damit gerechnet werden, daß die zu reinigende Abluft zusätzlich mit festen Staubpartikeln belastet ist. Außerdem können Bestandteile in der Abluft enthalten sein, die bei der katalytischen Verbrennung Aschepartikel bilden. Solche Bestandteile müssen zuvor entfernt werden, damit der Katalysator nicht schon nach kurzer Betriebszeit verschmutzt bzw. zuwächst. Für diese Fälle wird deshalb vorgeschlagen, daß dem Katalysator ein entsprechender Abscheider vorgeschaltet wird. Abscheider für Staubpartikel und für Bestandteile, die zu Aschepartikeln führen, sind hinlänglich bekannt, so daß sich eine weitergehende Erläuterung dafür erübrigt. Bei der katalytischen Oxidation darf zudem ein in der Abluft vorhandener Tropfen eine kritische Größe nicht Überschreiben, da ansonsten die katalytische Oxidation nur unvollkommen abläuft. Um dies zu vermeiden wird außerdem vorgeschlagen, daß für Abluft, die Teilchen mit überkritischer Tröpfchengröße aufweist, ein Zerstäuber dem Katalysator vorgeschaltet wird.

In der Zeichnung wird das erfindungsgemäße Verfahren näher erläutert.

Es zeigen:
- Fig. 1: im vergrößerten Maßstab einen Teilbereich einer gewachsenen Kristallschicht auf der Oberfläche eines metallischen Gewebebandes
- Fig. 2: im vergrößerten Maßstab einen Teilbereich einer Kristallschicht mit zwei unterschiedlichen Kristallstrukturen
- Fig. 3: ein Zeit-Temperaturschaubild für die Erwärmung des Adsorptivs
- Fig. 4: im Längsschnitt eine Abluftreinigungsvorrichtung mit Adsorptiv und nachgeschaltetem Katalysator

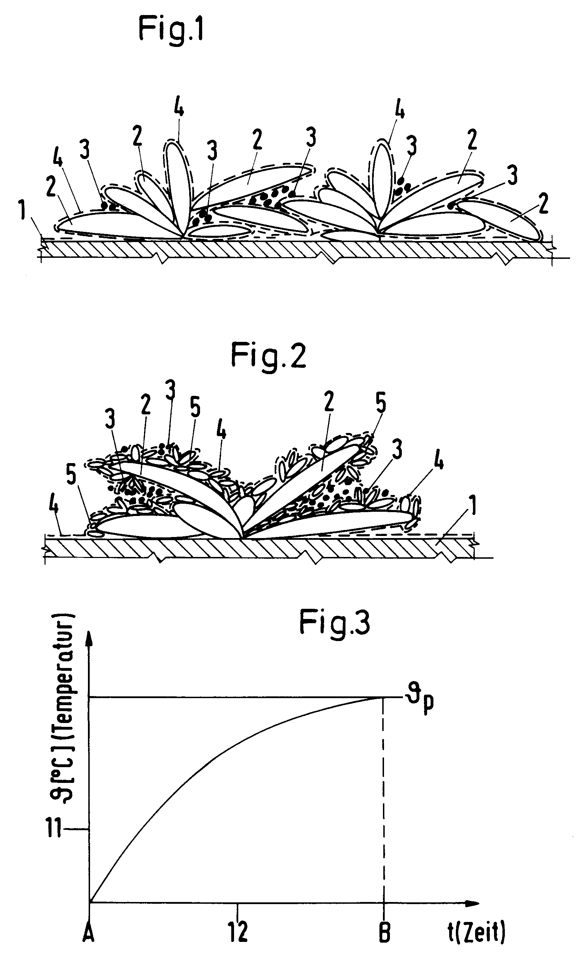

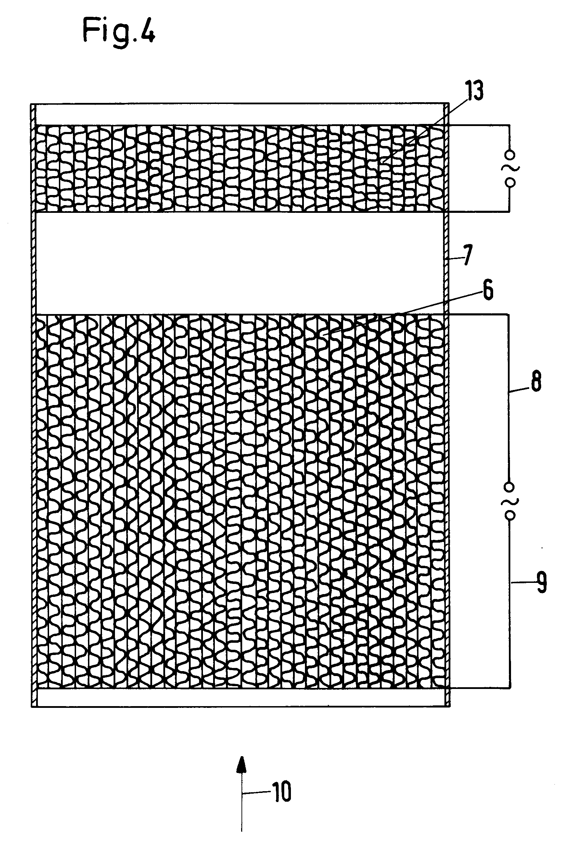

In Figur 1 ist in einem vergrößerten Maßstab ein auf der Oberfläche eines metallischen Gewebebandes 1 gewachsene Kristallschicht, bestehend aus einer Vielzahl von einzelnen Kristallen 2 dargestellt. Um diese Kristallschicht zu erzeugen, wird das Gewebeband 1 in ein entsprechendes Bad mit einer Kristallösung getaucht. Nach dem Herausnehmen aus dem Bad erfolgt das Kristallwachstum durch eine zeit- und temperaturgesteuerte Trocknung. Für die gewünschte Adsorptivwirkung ist wesentlich, daß die Kristallschicht möglichst viele einzelne Kristalle 2 aufweist, damit die für die Anlagerung der Schadstoffe 3 notwendigen kleinen Zwischenräume entstehen. Die erfindungsgemäße Doppelfunktion von Adsorptiv und Katalysator wird dadurch erreicht, daß die Oberfläche des Gewebebandes 1, als auch jeder einzelne Kristall 2 mit einer Schicht 4 eines üblichen Katalysatormaterials z. B. Pt-Pd überzogen ist. Zur Verdeutlichung ist diese Schicht 4 übertrieben dick und mit gestrichelt gezeichneten Linien dargestellt. Nach Beladung des beschichteten Gewebebandes 1 mit der theoretisch möglichen Beladungskapazität erfolgt die Regenerierung des Adsorptivs durch Erwärmung des Gewebebandes 1 auf Prozeßtemperatur. Einzelheiten dazu werden in Fig. 4 erläutert.

In Figur 2 ist im gleichen vergrößerten Maßstab eine Weiterentwicklung der Idee des beschichteten Gewebebandes 1 dargestellt. Diese zeichnet sich dadurch aus, daß man auf den relativ groben einzelnen Kristallen 2 einer ersten Kristallschicht eine weitere Schicht mit einer sehr viel feineren Kristallstruktur 5 anwachsen läßt. Dadurch entstehen im Unterschied zu der in Fig. 1 dargestellten Ausführungsform noch wesentlich kleinere Zwischenräume für die Anlagerung der Schadstoffe 3. Die adsorptive Wirkung eines solchen beschichteten Elements wird entsprechend gesteigert und kommt damit in die Nähe der Wirkung von Aktivkohle.

Figur 4 zeigt grob vereinfacht im Längsschnitt eine Abluftreinigungsvorrichtung mit dem erfindungsgemäß als Adsorptiv und Katalysator wirkenden Element 6. Dieses Element 6 wird in der Weise hergestellt, daß das beschichtete Gewebeband 1 entsprechend Fig. 1 oder 2 spiralförmig zu einem Rohrmodul gewickelt oder mäanderförmig zu einem Kanalmodul gefaltet wird. Das so hergestellte Modul wird in ein Gehäuse, beispielsweise einen Rohrabschnitt 7 gesteckt und entsprechend abgedichtet. Für die Beheizung des Moduls sind zwei elektrische Kabelanschlüsse 8,9 am Element 6 befestigt. Die schadstoffbeladene Abluft durchströmt in Pfeilrichtung 10 das Element 6 und durch die bereits ausführlich beschriebene adsorptive Wirkung dieses Elementes 6 kommt es zu einer Anlagerung der Schadstoffe 3 am beschichteten Gewebeband 1 (Fig. 1 oder 2).

Sobald die Beladung des Elementes 6 unter Berücksichtigung eines entsprechenden Sicherheitszuschlages in etwa die theoretisch mögliche Beladungskapazität erreicht hat, wird die Beheizung des Elementes 6 eingeschaltet. Das Element 6 hat zwar im Vergleich zu den bisher üblichen Trägerkorpern eine geringe Wärmespeicherkapazität, aber dennoch ist die Zeit bis zum Erreichen der erforderlichen Prozeßtemperatur endlich. Zur besseren Veranschaulichung ist in Figur 3 grafisch ein typischer Zeit-Temperaturverlauf für die Erwärmung dargestellt. Auf der Ordinate 11 ist die Temperatur und auf der Abszisse 12 die Zeit abgetragen. Der Buchstabe A im Nullpunkt kennzeichnet den Zeitpunkt des Einschaltens der Beheizung zur Erwärmung des Elementes 6. Nach Ablauf einer Zeit t hat im Punkt B das Element 6, genauer gesagt die Oberfläche des Elementes 6 die erforderliche Prozeßtemperatur ϑp beispielsweise 200 Grad Celsius erreicht. In der Erwärmungsphase zwischen den Punkten A und B ist die katalytische Wirkung des Elementes 6 eingeschränkt. Aus diesem Grunde muß damit gerechnet werden, daß die angelagerten Schadstoffe 3 nur teilweise verbrannt werden. Bei geringen Anforderungen an eine solche Reinigungsanlage kann man dieses in Kauf nehmen,zumal der Zeitraum dafür sehr kurz ist und in der Größenordnung von nur einigen Minuten liegt. Bei Anlagen mit sehr strengen Auflagen kann man diese Erwärmungsphase dadurch überbrücken, daß man entsprechend der Darstellung in Fig. 4 dem Adsorptiv 6 einen beheizbaren Katalysator 13 nachschaltet. Dieser Katalysator 13 ist vor dem Einschalten der Beheizung des Adsorptivs 6 schon auf Prozeßtemperatur erwärmt, so daß auch die anfallenden teilverbrannten Zwischenprodukte vollständig katalytisch verbrannt werden. Die bauliche Gestaltung des nachgeschalteten Katalysators ist an sich von untergeordneter Bedeutung. Da aber die erfindungsgemäße Abluftreinigungsanlage insbesondere für eine geringe Schadstoffkonzentration ausgelegt muß auch der nachgeschaltete Katalysator für eine Oxidation des Abgasstromes mit geringen Schadstoffkonzentrationen geeignet sein. Aus diesem Grunde bietet es sich an, im Prinzip den gleichen Typ wie das vorgeschaltete Adsorptiv zu verwenden. Wesentlich dabei ist nur, daß die baulichen Maße geringer sein können und auf eine geringe Wärmespeicherkapazität großen Wert gelegt werden muß. Die geringe Wärmespeicherkapazität ist von Bedeutung für den erforderlichen Zeitversatz des Einschaltens der Beheizung für den nachgeschalteten Katalysator 13 im Vorlauf zum Einschalten der Beheizung des adsorptiv wirkenden Elementes 6. Die steuerungsmäßigen und regelungstechnischen Aspekte der Beheizung beider Katalysatoren 6,13 sind in der Beschreibung schon ausführlich erörtert worden, so daß sich eine Wiederholung hier erübrigt. Nicht dargestellt in der Figur 4 ist die Anordnung eines Temperaturfühlers beispielsweise eines Thermoelementes sowohl am Adsorptiv 6 als auch am nachgeschalteten Katalysator 13. Diese Temperaturfühler sind Bestandteil der Regelung für die Beheizung beider Elemente 6,13.

## Patentansprüche

1. Verfahren zur Reinigung schadstoffbeladener Abluft durch heterogene Katalyse, bei dem die Abluft durch Druck- und Sogwirkung geführt an einem festen, mit Katalysatormaterial beschichteten Element vorbeiströmt und die Schadstoffe adsorptiv am Element angelagert und bei Berührung mit der Kat-Oberfläche zu umweltverträglichen gasförmigen Reaktionsprodukten oxidiert werden,
**dadurch gekennzeichnet**,
daß die Abluft mit Raumtemperatur dem Element, das aus einem beheizbaren metallischen Gewebeband mit geringer Wärmekapazität besteht, zugeführt und spätestens nach Beladung des Elementes mit der theoretisch maximal möglichen Beladungskapazität die adsorbierten Schadstoffe durch direkte Erwärmung des Elementes auf die erforderliche Prozeßtemperatur durch Anlegen einer elektrischen Spannung an das Element in bekannter Weise katalytisch verbrannt werden.

2. Verfahren nach Anspruch 1,
**dadurch gekennzeichnet**,
daß die Schadstoffkonzentration und die anfallende Menge der zu reinigenden Abuft laufend gemessen und zur Beladungskapazität des als Adsorptiv ausgebildeten Elementes in Beziehung gesetzt und aus diesem Verhältnis unter Berücksichtigung eines festgelegten Sicherheitsabstandes ein Steuersignal für das Einschalten der Beheizung des Adsorptivs gebildet und nach Ablauf einer festgelegten Abbrennzeit die Beheizung wieder abgeschaltet wird.

3. Verfahren nach den Ansprüchen 1 und 2,
**dadurch gekennzeichnet,**
daß die Oberflächentemperatur des beheizten Elementes gemessen wird und die Meßsignale einem Regelkreis für die Beheizung des Elementes zugeführt werden.

4. Verfahren nach den Ansprüchen 1 bis 3,
**dadurch gekennzeichnet,**
daß die in der zugeführten Abluft enthaltenden festen Staubpartikel sowie die Bestandteile der Abluft, die bei der katalytischen Oxidation Ascheteilchen bilden, vor der adsorptiven Anlagerung in bekannter Weise abgeschieden werden.

5. Verfahren nach den Ansprüchen 1 bis 3,
**dadurch gekennzeichnet,**
daß die in der Abluft enthaltenden überkritisch großen Tröpfchen vor der adsorptiven Anlagerung auf eine unterkritische Größe in bekannter Weise zerstäubt werden.

6. Verfahren nach den Ansprüchen 1 bis 5,
**dadurch gekennzeichnet,**
daß in der Phase der Erwärmung des Adsorptivs auf die erforderliche Prozeßtemperatur nach Einschalten der Beheizung die in dieser Phase anfallenden teilverbrannten Zwischenprodukte auf die Eingangsseite des Adsorptivs rückgeführt werden, gegebenenfalls unter Hinzumischung von Frischluft.

7. Verfahren nach den Ansprüchen 1 bis 5,
**dadurch gekennzeichnet**,
daß in der Phase der Erwärmung des Adsorptivs auf die erforderliche Prozeßtemperatur nach Einschalten der Beheizung die in dieser Phase anfallenden teilverbrannten Zwischenprodukte mittels eines vorher auf Prozeßtemperatur erwärmten nachgeschalteten Katalysators vollständig verbrannt werden.

8. Vorrichtung zur Durchführung des Verfahrens nach Anspruch 1 mit einem länglichen Gehäuse, in dem ein mit einem Katalysatormaterial beschichtetes festes Element, an dem sich die Schadstoffe adsorptiv anlagern, angeordnet ist und durch im Gehäuse angeordnete Öffnungen die zu reinigende Abluft zuführbar bzw. die gasförmigen Reaktionsprodukte abführbar sind,
**dadurch gekennzeichnet**,
daß das adsorptiv wirkende Element (6) aus einem beheizbaren metallischen Gewebeband (1) mit einer Maschenweite kleiner 1 mm und einer Drahtdicke kleiner 0,1 mm besteht und dieses Gewebeband eine dünne Schicht von gewachsenen Kristallen (2, 5), die mit dem Katalysatormaterial (4) überzogen sind und zwei Kabelanschlüsse (8, 9) für die elektrische Beheizung aufweist.

9. Vorrichtung nach Anspruch 8,
**dadurch gekennzeichnet**,
daß das metallische Gewebeband (1) unter Zuhilfenahme von elektrisch isolierenden Abstandsmitteln spiralförmig zu einem rohrförmigen Modul gewickelt ist.

10. Vorrichtung nach Anspruch 8,
**dadurch gekennzeichnet,**
daß das metallische Gewebeband (1) unter Zuhilfenahme von elektrisch isolierenden Abstandsmittel mäanderförmig zu einem kastenartigen Modul gefaltet ist.

11. Vorrichtung nach Anspruch 9 oder 10,
**dadurch gekennzeichnet,**
daß das Abstandsmittel ein Band oder Gestrick aus hauchdünnen Keramikfasern ist.

12. Vorrichtung nach Anspruch 11,
**dadurch gekennzeichnet,**
daß das Band oder Gestrick eine dünne Schicht von gewachsenen Kristallen (2, 5) aufweist, die mit dem Katalysatormaterial (4) überzogen sind.

13. Vorrichtung nach Anspruch 8 oder 12,
**dadurch gekennzeichnet,**
daß die gewachsene Kristallschicht aus einer ersten Schicht mit Kristallen (2) einer groben Struktur und einer zweiten daran angelagerten Schicht (5) mit einer sehr feinen Kristallstruktur besteht.

14. Vorrichtung nach den Ansprüchen 8 bis 13,
**dadurch gekennzeichnet,**
daß das Mineralkristall (2, 5) ein Nickelspinell ist.

15. Vorrichtung nach den Ansprüchen 8 bis 14,
**dadurch gekennzeichnet,**
daß am beheizbaren Gewebeband (1) ein Temperaturfühler befestigt ist.

16. Vorrichtung nach den Ansprüchen 8 bis 15,
**dadurch gekennzeichnet,**
daß mindestens ein Abscheider für Staubpartikel und/oder Bestandteile der Abluft, die bei der katalytischen Verbrennung zu Ascheteilchen führen, vorgeschaltet ist.

17. Vorrichtung nach den Ansprüchen 8 bis 16,
**dadurch gekennzeichnet,**
daß ein Zerstäuber vorgeschaltet ist.

18. Vorrichtung nach den Ansprüchen 8 bis 17,
**dadurch gekennzeichnet,**
daß dem Adsorptiv (6) ein beheizbarer Katalysator (13) mit geringer Wärmespeicherkapazität nachgeschaltet ist, dessen Beheizung steuerungsmäßig mit der Ermittlung des Beladungszustandes und der Temperatur des Adsorptivs (6) verknüpft ist.

## Claims

1. A method of cleaning pollutant-charged outlet air by heterogeneous catalysis, in which the outlet air, conveyed by pressure and suction action, flows past a solid element coated with catalyst material and the pollutants are adsorptively attached to the element and oxidised into environmentally tolerated gaseous reaction products upon contact with the cat surface, characterized in that the outlet air is supplied to the element at room temperature, said element consisting of a heatable metallic fabric tape with low heat capacity, and, at the latest after charging of the element with theoretically the maximum possible charging capacity, the adsorbed pollutants are catalytically burned in a known way by direct heating of the element to the necessary process temperature by feeding an electrical voltage to the element.

2. A method according to claim 1, characterized in that the pollutant concentration and the amount of outlet air arising to be cleaned are measured constantly and related to the charging capacity of the element constructed as an adsorbent and from this relationship, taking into consideration a specified safety margin, a control signal is formed to switch on heating of the adsorbent, the heating being switched off again after expiry of a specified burn-off time.

3. A method according to claims 1 and 2, characterized in that the surface temperature of the heated element is measured and the measuring signals are supplied to a control circuit for heating of the element.

4. A method according to claims 1 to 3, characterized in that the solid dust particles contained in the outlet air supplied as well as the components of the outlet air which form ash particles upon catalytic oxidation are separated in the known way prior to adsorptive attachment.

5. A method according to claims 1 to 3, characterized in that the supercritically large droplets contained in the outlet air are comminuted in the known way to a subcritical size prior to adsorptive attachment.

6. A method according to claims 1 to 5, characterized in that, in the phase of heating the adsorbent to the required process temperature after switching-on of the heating, the partially burned intermediate products arising in this phase are returned to the inlet side of the adsorbent, with the optional addition of fresh air.

7. A method according to claims 1 to 5, characterized in that, in the phase of heating the adsorbent to the required process temperature after switching-on of the heating, the partially burned intermediate products arising in this phase are completely burned by means of a catalyst connected downstream and heated previously to the process temperature.

8. A device for implementing the method according to claim 1, comprising an elongate housing, in which there is arranged a solid element coated with a catalyst material to which the pollutants attach themselves adsorptively, the outlet air to be cleaned being capable of being supplied and the gaseous reaction products removed through openings arranged in the housing, characterized in that the adsorptively acting element (6) consists of a heatable metallic fabric tape (1) with a mesh width of less than 1 mm and a wire size of less than 0.1 mm and in that this fabric tape comprises a thin layer of grown crystals (2, 5) which are coated with the catalyst material (4) and two cable connections (8, 9) for the electric heating.

9. A device according to claim 8, characterized in that the metallic fabric tape (1) is wound helically with the aid of electrically insulating spacer means to form a tubular module.

10. A device according to claim 8, characterized in that the metallic fabric tape (1) is folded in zig-zag fashion with the aid of electrically insulating spacer means to form a box-type module.

11. A device according to claim 9 or claim 10, characterized in that the spacer means is a tape or knitted fabric of very thin ceramic fibres.

12. A device according to claim 11, characterized in that the tape or knitted fabric comprises a thin layer of grown crystals (2, 5), which are coated with the catalyst material (4).

13. A device according to claim 8 or claim 12, characterized in that the grown crystal layer consists of a first layer with crystals (2) of a coarse structure and second layer (5) attached thereto with a very fine crystal structure.

14. A device according to claims 8 to 13, characterized in that the mineral crystal (2, 5) is a nickel spinel.

15. A device according to claims 8 to 14, characterized in that a temperature sensor is attached to the heatable fabric tape (1).

16. A device according to claims 8 to 15, characterized in that at least one separator for dust particles and/or components of the outlet air which lead to ash particles upon catalytic combustion is connected upstream.

17. A device according to claims 8 to 16, characterized in that a comminutor is connected upstream.

18. A device according to claims 8 to 17, characterized in that a heatable catalyst (13) with low heat storage capacity is connected downstream of the adsorbent (6), heating of which catalyst (13) is connected control-wise with determination of the charging state and the temperature of the adsorbent (6).

## Revendications

1. Procédé pour purifier de l'air d'échappement contenant des produits nocifs par catalyse hétérogène, dans lequel l'air d'échappement, guidé par un effet de pression et de succion, est amené à un élément solide enrobé d'une matière de catalyseur, et les produits nocifs sont déposés, en étant adsorbés, sur l'élément et sont oxydés par contact avec la surface du catalyseur en produits réactionnels gazeux compatibles avec l'environnement,
caractérisé en ce que l'air d'échappement est amené à température ambiante à l'élément qui est constitué d'une bande de tissu métallique pouvant être chauffée à faible capacité thermique et, au plus tard après le chargement de l'élément avec la capacité de chargement théoriquement maximale possible, les produits nocifs adsorbés sont brûlés de façon catalytique par chauffage direct de l'élément à la température nécessaire du processus par application d'une tension électrique sur l'élément, de façon connue.

2. Procédé selon la revendication 1,
caractérisé en ce que la concentration des produits nocifs et la quantité produite de l'air d'échappement à purifier sont mesurées de façon continue et liées à la capacité de chargement de l'élément adsorbant et, à partir de ce rapport, en tenant compte d'une marge de sécurité déterminée, un signal de commande pour la mise en route du chauffage de l'élément adsorbant est formé et, après écoulement d'un temps de brûlage déterminé, le chauffage est à nouveau coupé.

3. Procédé selon les revendications 1 et 2,
caractérisé en ce que la température de surface de l'élément chauffé est mesurée et les signaux de mesure sont amenés à un circuit de réglage pour le chauffage de l'élément.

4. Procédé selon les revendications 1 à 3,
caractérisé en ce que les particules de poussière solides contenues dans l'air d'échappement amené, ainsi que les parties constitutives de l'air d'échappement, qui forment lors de l'oxydation catalytique des particules de cendre, sont séparées, de façon connue, avant l'application adsorbante.

5. Procédé selon les revendications 1 à 3,
caractérisé en ce que les gouttelettes de taille surcritique contenues dans l'air d'échappement sont pulvérisées, de façon connue, à une taille sous-critique avant l'application adsorbante.

6. Procédé selon les revendications 1 à 5,
caractérisé en ce que, dans la phase de chauffage de l'adsorbant à la température de procédé nécessaire, après mise en route du chauffage, les produits intermédiaires partiellement brûlés produits dans cette phase sont ramenés du côté d'entrée de l'adsorbant, le cas échéant en y mélangeant de l'air frais.

7. Procédé selon les revendications 1 à 5,
caractérisé en ce que, dans la phase de chauffage de l'adsorbant à la température de procédé nécessaire, après mise en route du chauffage, les produits intermédiaires partiellement brûlés produits dans cette phase sont brûlés complètement au moyen d'un catalyseur disposé en aval, précédemment chauffé à la température du procédé.

8. Dispositif pour la mise en oeuvre du procédé selon la revendication 1, comportant un carter allongé, dans lequel est agencé un élément solide enrobé d'une matière de catalyseur, sur lequel se déposent, en étant adsorbés, les produits nocifs, et dans lequel l'air d'échappement à purifier peut être amené ou les produits réactionnels gazeux peuvent en être évacués par des ouvertures agencées dans le carter,
caractérisé en ce que l'élément (6), agissant de façon adsorbante, est constitué d'une bande de tissu métallique (1) pouvant être chauffée avec une largeur de maille inférieure à 1 mm et une épaisseur de fil métallique inférieure à 0,1 mm, et cette bande de tissu présente une couche mince de cristaux (2,5) ayant subi une croissance, qui sont revêtus par la matière de catalyseur (4), et deux câbles de raccordement (8,9) pour le chauffage électrique.

9. Dispositif selon la revendication 8,
caractérisé en ce que la bande de tissu métallique (1) est enroulée en forme de spirale en un module tubulaire à l'aide de moyens d'écartement électriquement isolants.

10. Dispositif selon la revendication 8,
caractérisé en ce que la bande de tissu métallique (1) est pliée en forme de méandre en un module du type boîte à l'aide de moyens d'écartement électriquement isolants.

11. Dispositif selon la revendication 9 ou 10,
caractérisé en ce que le moyen d'écartement est une bande ou un tricotage de fibres céramiques très minces.

12. Dispositif selon la revendication 11,
caractérisé en ce que la bande ou le tricotage présente une couche mince de cristaux (2,5) ayant subi une croissance, qui sont revêtus par la matière de catalyseur (4).

13. Dispositif selon la revendication 8 ou 12,
caractérisé en ce que la couche de cristaux ayant subi une croissance est constituée d'une première couche ayant des cristaux (2) d'une structure grossière et d'une seconde couche (5) déposée sur celle-ci ayant une structure cristalline très fine.

14. Dispositif selon les revendications 8 à 13,
caractérisé en ce que le cristal minéral (2,5) est de la spinelle de nickel.

15. Dispositif selon les revendications 8 à 14,
caractérisé en ce qu'un capteur de température est fixé sur la bande de tissu (1) pouvant être chauffée.

16. Dispositif selon les revendications 8 à 15,
caractérisé en ce qu'au moins un séparateur pour les particules de poussière et/ou les parties constitutives de l'air d'échappement, qui fournissent des particules de cendre lors du brûlage catalytique, est prévu en amont.

17. Dispositif selon les revendications 8 à 16,
caractérisé en ce qu'un dépoussiéreur est prévu en amont.

18. Dispositif selon les revendications 8 à 17,
caractérisé en ce que l'adsorbant (6) est disposé en amont d'un catalyseur (13) pouvant être chauffé ayant une faible capacité de stockage calorifique, dont le chauffage est couplé, en étant commandé, à la détermination de l'état de chargement et de la température de l'adsorbant (6).
